# EUROPEAN PATENT APPLICATION

(11) **EP 4 745 819 A1**
(43) Date of publication of application: **20.05.2026**
(21) Application number: 24844193.3
(22) Date of filing: 04.02.2024
(51) Int. Cl.: G06F 21/72

(54) **DATA PROCESSING METHOD AND APPARATUS, AND DEVICE**

(30) Priority: 27.07.2023 CN 202310935441
(71) Applicant: Huawei Technologies Co., Ltd., Shenzhen, Guangdong 518129 (CN)
(72) Inventor: WANG, Tao, Shenzhen, Guangdong 518129 (CN)
(74) Representative: Maiwald GmbH
(86) International application number: PCT/CN2024/075760
(87) International publication number: WO 2025/020494

(57) **Abstract**

This application relates to the field of communication technologies, and provides a data processing method and apparatus, and a device, to protect security of model information in a running period without using a hardware isolation technology, for example, a TEE. The method is applied to a data acceleration processing apparatus, where the data acceleration processing apparatus includes an acceleration processor and a memory, and the memory includes an unprotected storage area and a protected storage area. The method includes: The memory receives model information sent by a general-purpose processing apparatus, and stores the model information in the unprotected storage area, where the unprotected storage area is accessible to the general-purpose processing apparatus, and the model information includes model weights in a ciphertext form. The acceleration processor decrypts the model weights in the ciphertext form, and stores, in the protected storage area, model weights in a plaintext form that are obtained through decryption, where the protected storage area is inaccessible to the general-purpose processing apparatus.

## Description

This application claims priority to Chinese Patent Application No. 202310935441.X, filed with the China National Intellectual Property Administration on July 27, 2023 and entitled "DATA PROCESSING METHOD AND APPARATUS, AND DEVICE", which is incorporated herein by reference in its entirety.

### TECHNICAL FIELD

This application relates to the field of communication technologies, and in particular, to a data processing method and apparatus, and a device.

### BACKGROUND

With popularization and application of artificial intelligence (artificial intelligence, AI) in various industries, protection of an AI model becomes increasingly important. The protection of the AI model may mainly include protection in three phases: storage, transmission, and running, and how to implement protection in the running phase has always been a difficult issue in the industry.

Currently, to protect security of the AI model, an electronic device having a confidential computing (confidential computing) capability is usually used. For example, the electronic device includes a central processing unit (central processing unit, CPU) and a graphics processing unit (graphics processing unit, GPU), and the CPU and the GPU are connected through a peripheral component interconnect express (peripheral component interconnect express, PCIe) bus. The CPU is required to support a trusted execution environment (trusted execution environment, TEE) capability, the GPU is required to support a multi-instance isolation capability, and the PCIe bus is required to support encryption and decryption transmission capabilities, so as to implement a hardware isolation environment across the CPU and the GPU, and ensure the security of the running AI model.

However, this solution imposes a high requirement on hardware of the electronic device. For example, the hardware of the electronic device is required to support the isolation capability and the encryption and decryption transmission capabilities. Therefore, this solution is limited in usage as it is difficult to apply the solution to an existing related product in the market.

### SUMMARY

This application provides a data processing method and apparatus, and a device, to protect security of model information in a running period without using a hardware isolation technology, for example, a TEE.

To achieve the foregoing objective, the following technical solutions are used in embodiments of this application.

According to a first aspect, a data processing method is provided, applied to a data acceleration processing apparatus (that is, an apparatus having a data acceleration processing function, for example, a GPU or an NPU), where the data acceleration processing apparatus includes an acceleration processor and a memory, the memory includes an unprotected storage area and a protected storage area, the data acceleration processing apparatus may communicate with a general-purpose processing apparatus, and the method includes: The memory receives model information sent by the general-purpose processing apparatus, and stores the model information in the unprotected storage area, where the unprotected storage area is accessible to the general-purpose processing apparatus, and the model information includes model weights in a ciphertext form; and the acceleration processor decrypts the model weights in the ciphertext form, and stores, in the protected storage area, model weights in a plaintext form that are obtained through decryption, where the protected storage area is inaccessible to the general-purpose processing apparatus.

In the foregoing technical solution, the general-purpose processing apparatus may send the model information to the data acceleration processing apparatus, through a bus and the model weights in the model information are in the ciphertext form, thereby ensuring security of the model weights in the general-purpose processing apparatus and security in a transmission process. In addition, after decrypting the model weights in the ciphertext form, the data acceleration processing apparatus stores, in the protected storage area inaccessible to the general-purpose processing apparatus, the model weights in the plaintext form that are obtained through decryption. That is, the model weights in the plaintext form are inaccessible to the general-purpose processing apparatus. In this way, when the data acceleration processing apparatus executes a corresponding computing task based on the model weights in the plaintext form, security of the model weights can be ensured during execution. Therefore, in comparison with a related technology, this embodiment of this application can be used for protecting security of the model information in a running period without using a hardware isolation technology, for example, a TEE, so as to prevent the model information from being theft.

In a possible implementation of the first aspect, a specific process in which the acceleration processor decrypts the model weights in the ciphertext form may be performed by a corresponding accelerator or operator in the acceleration processor. For example, the acceleration processor may include a decryption operator AICPU, and the decryption operator AICPU may be configured to decrypt the model weights in the ciphertext form. In addition, a TEE environment is further disposed in the data acceleration processing apparatus, and the process in which the acceleration processor decrypts the model weights in the ciphertext form may be performed in the TEE environment.

In a possible implementation of the first aspect, the data acceleration processing apparatus further includes a persistent storage, and the persistent storage stores a decryption key; and the acceleration processor decrypts the model weights in the ciphertext form includes: The acceleration processor obtains the decryption key from the persistent storage, and decrypts the model weights in the ciphertext form according to the decryption key. In the foregoing possible implementation, the decryption key is stored in the persistent storage, and the model weights in the ciphertext form are decrypted according to the decryption key, so as to ensure security of the model weights.

In a possible implementation of the first aspect, the data acceleration processing apparatus further includes a persistent storage, the persistent storage stores a public key for signature verification, and the model information further includes signature information; and the method further includes: The acceleration processor obtains the public key for signature verification from the persistent storage, and determines, according to the public key for signature verification, that the signature information in the model information is successfully verified. In the foregoing possible implementation, integrity of the model information can be ensured by performing signature and signature verification on the model information.

In a possible implementation of the first aspect, the decryption key and/or the public key for signature verification are/is stored in an encrypted manner, the data acceleration processing apparatus further includes a one-time programmable storage, and the one-time programmable storage stores a hardware unique key HUK; and the method further includes: The acceleration processor obtains the HUK from the one-time programmable storage, and performs encryption and decryption on the decryption key and/or the public key for signature verification according to a derivation key of the HUK. In the foregoing possible implementation, the decryption key and/or the public key for signature verification are/is stored in an encrypted manner, so that confidentiality of the decryption key and/or the public key for signature verification can be ensured, thereby ensuring security of the model weights.

In a possible implementation of the first aspect, the model weights in the ciphertext form and the signature information that are in the model information may be generated in a development environment.

In a possible implementation of the first aspect, the model weights are stored continuously in the protected storage area; and the method further includes: The acceleration processor sends, to the general-purpose processing apparatus, base addresses of the model weights in the plaintext form in the protected storage area, where the base addresses are used for determining logical addresses of the model weights; and the acceleration processor receives the logical addresses that are of the model weights and that are sent by the general-purpose processing apparatus, and obtains the model weights in the plaintext form from the protected storage area based on the logical addresses. In the foregoing possible implementation, the acceleration processor may send, to the general-purpose processing apparatus, the base addresses of the model weights in the plaintext form in the protected storage area, so that the general-purpose processing apparatus determines the logical addresses based on the base addresses and address offset values of the model weights, and sends the logical addresses to the acceleration processor. Therefore, when scheduling the data acceleration processing apparatus to execute a computing task, the general-purpose processing apparatus does not need to read the model weights, and only needs to send the logical addresses of the model weights, thereby ensuring security of the model weights.

In a possible implementation of the first aspect, the method further includes: The acceleration processor receives the address offset values that are of the model weights and that are sent by the general-purpose processing apparatus; and the acceleration processor determines the logical addresses of the model weights based on the base addresses of the model weights in the plaintext form in the protected storage area and the address offset values. In the foregoing possible implementation, when scheduling the data acceleration processing apparatus to execute a computing task, the general-purpose processing apparatus does not need to read the model weights, and only needs to send the address offset values of the model weights, thereby ensuring security of the model weights.

In a possible implementation of the first aspect, the method further includes: The acceleration processor receives memory configuration information, and configures the unprotected storage area and/or the protected storage area in the memory based on the memory configuration information. In the foregoing possible implementation, the protected storage area inaccessible to the general-purpose processing apparatus is configured in the memory in the data acceleration processing apparatus, so that security of the model weights can be ensured.

According to a second aspect, a data processing method is provided, applied to a general-purpose processing apparatus, where the general-purpose processing apparatus communicates with a data acceleration processing apparatus through a bus, a memory in the data acceleration processing apparatus includes an unprotected storage area accessible to the general-purpose processing apparatus and a protected storage area inaccessible to the general-purpose processing apparatus, and the method includes: obtaining model information, where the model information includes model weights in a ciphertext form; and sending the model information to an acceleration processor, to cause the memory in the data acceleration processing apparatus to store the model information in the unprotected storage area, and cause the acceleration processor to store, in the protected storage area, model weights that are in a plaintext form and that are obtained by decrypting the model weights in the ciphertext form.

In the foregoing technical solution, the general-purpose processing apparatus may transmit the model information to the data acceleration processing apparatus, and the model weights in the model information are in the ciphertext form, thereby ensuring security of the model weights in the general-purpose processing apparatus and security in a transmission process. In addition, after decrypting the model weights in the ciphertext form, the data acceleration processing apparatus stores, in the protected storage area inaccessible to the general-purpose processing apparatus, the model weights in the plaintext form that are obtained through decryption. That is, the model weights in the plaintext form are inaccessible to the general-purpose processing apparatus. In this way, when the data acceleration processing apparatus executes a computing task based on the model weights in the plaintext form, security of the model weights can be ensured during execution. Therefore, in comparison with a related technology, this embodiment of this application can be used for protecting security of the model information in a running period without using a hardware isolation technology, for example, a TEE, so as to prevent the model information from being theft.

In a possible implementation of the second aspect, the model information further includes signature information. In the foregoing possible implementation, integrity of the model information can be ensured by performing signature and signature verification on the model information.

In a possible implementation of the second aspect, the method further includes: The general-purpose processing apparatus receives base addresses that are sent by the data acceleration processing apparatus and that are of the model weights in the plaintext form in the protected storage area; the general-purpose processing apparatus determines logical addresses of the model weights based on the base addresses and address offset values of the model weights; and the general-purpose processing apparatus sends the logical addresses of the model weights to the data acceleration processing apparatus. In the foregoing possible implementation, the general-purpose processing apparatus may receive the base addresses that are sent by the data acceleration processing apparatus and that are of the model weights in the plaintext form in the protected storage area, determine the logical addresses based on the base addresses and the address offset values of the model weights, and send the logical addresses to the data acceleration processing apparatus. Therefore, when scheduling the data acceleration processing apparatus to execute a computing task, the general-purpose processing apparatus does not need to read the model weights, and only needs to read the logical addresses of the model weights, thereby ensuring security of the model weights.

In a possible implementation of the second aspect, the method further includes: The general-purpose processing apparatus sends the address offset values of the model weights to the data acceleration processing apparatus, to cause the data acceleration processing apparatus to determine the logical addresses of the model weights based on the base addresses of the model weights in the plaintext form in the protected storage area and the address offset values. In the foregoing possible implementation, when scheduling the data acceleration processing apparatus to execute a computing task, the general-purpose processing apparatus does not need to read the model weights, and only needs to send the address offset values of the model weights, thereby ensuring security of the model weights.

In a possible implementation of the second aspect, the method further includes: sending memory configuration information to the data acceleration processing apparatus through a management channel, where the memory configuration information is used for configuring the unprotected storage area and/or the protected storage area. In the foregoing possible implementation, the protected storage area inaccessible to the general-purpose processing apparatus is configured in the memory in the data acceleration processing apparatus, so that security of the model weights can be ensured.

According to a third aspect, a data processing method is provided, applied to a data acceleration processing apparatus, where the data acceleration processing apparatus includes an acceleration processor and a memory, the memory includes an unprotected storage area and a protected storage area, the unprotected storage area includes model information, the model information includes model weights in a ciphertext form, the protected storage area includes model weights that are in a plaintext form and that are obtained by decrypting the model weights in the ciphertext form, and the method includes: The acceleration processor obtains a target task sent by a general-purpose processing apparatus based on the model information; the acceleration processor obtains a first logical address of a target weight, and reads the target weight from the protected storage area based on the first logical address, where the target weight is a weight in the model weights that needs to be used when the target task is executed, and the protected storage area is inaccessible to the general-purpose processing apparatus; and the acceleration processor executes the target task based on the target weight.

In the foregoing technical solution, the data acceleration processing apparatus stores, in the unprotected storage area, the model information including the model weights in the ciphertext form, and stores, in the protected storage area inaccessible to the general-purpose processing apparatus, the corresponding model weights in the plaintext form that are obtained through decryption. That is, the model weights in the plaintext form are inaccessible to the general-purpose processing apparatus. In this way, when the data acceleration processing apparatus executes a corresponding target task based on the model weights in the plaintext form, security of the model weights can be ensured during execution.

In a possible implementation of the third aspect, that the acceleration processor obtains the logical address of the target weight includes: The acceleration processor determines base addresses of the model weights in the plaintext form in the protected storage area; the acceleration processor sends the base addresses to the general-purpose processing apparatus, where the base addresses are used for determining the first logical address of the target weight; and the acceleration processor receives the first logical address that is of the target weight and that is sent by the general-purpose processing apparatus. In the foregoing possible implementation, when executing a corresponding target task, the data acceleration processing apparatus does not need to read the target weight, and only needs to send the first logical address of the target weight, thereby ensuring security of the model weights.

According to a fourth aspect, a data acceleration processing apparatus is provided, where the data acceleration processing apparatus includes a processing unit and a storage unit, and the storage unit includes an unprotected storage area and a protected storage area. The storage unit is configured to: receive model information sent by a general-purpose processing apparatus, and store the model information in the unprotected storage area, where the unprotected storage area is accessible to the general-purpose processing apparatus, and the model information includes model weights in a ciphertext form; and the processing unit is configured to: decrypt the model weights in the ciphertext form, and store, in the protected storage area, model weights in a plaintext form that are obtained through decryption, where the protected storage area is inaccessible to the general-purpose processing apparatus.

In a possible implementation of the fourth aspect, the data acceleration processing apparatus further includes a persistent storage, and the persistent storage stores a decryption key; and the processing unit is further configured to: obtain the decryption key from the persistent storage, and decrypt the model weights in the ciphertext form according to the decryption key.

In a possible implementation of the fourth aspect, the data acceleration processing apparatus further includes a persistent storage, the persistent storage stores a public key for signature verification, and the model information further includes signature information; and the processing unit is further configured to: obtain the public key for signature verification from the persistent storage, and determine, according to the public key for signature verification, that the signature information in the model information is successfully verified.

In a possible implementation of the fourth aspect, the decryption key and/or the public key for signature verification are/is stored in an encrypted manner, the data acceleration processing apparatus further includes a one-time programmable storage, and the one-time programmable storage stores a hardware unique key HUK; and the processing unit is further configured to: obtain the HUK from the one-time programmable storage, and perform encryption and decryption on the decryption key and/or the public key for signature verification according to a derivation key of the HUK.

In a possible implementation of the fourth aspect, the model weights are stored continuously in the protected storage area; and the processing unit is further configured to: send, to the general-purpose processing apparatus, base addresses of the model weights in the plaintext form in the protected storage area, where the base addresses are used for determining logical addresses of the model weights; and receive the logical addresses that are of the model weights and that are sent by the general-purpose processing apparatus, and obtain the model weights in the plaintext form from the protected storage area based on the logical addresses.

In a possible implementation of the fourth aspect, the processing unit is further configured to: receive memory configuration information, and configure the unprotected storage area and/or the protected storage area based on the memory configuration information.

According to a fifth aspect, a general-purpose processing apparatus is provided, where the general-purpose processing apparatus is configured to communicate with a data acceleration processing apparatus, the data acceleration processing apparatus includes an acceleration processor and a memory, the memory includes an unprotected storage area accessible to the general-purpose processing apparatus and a protected storage area inaccessible to the general-purpose processing apparatus, and the general-purpose processing apparatus includes: a processing unit, configured to obtain model information, where the model information includes model weights in a ciphertext form; and a sending unit, configured to send the model information to the data acceleration processing apparatus, to cause the memory in the data acceleration processing apparatus to store the model information in the unprotected storage area, and cause the acceleration processor to store, in the protected storage area, model weights that are in a plaintext form and that are obtained by decrypting the model weights in the ciphertext form.

In a possible implementation of the fifth aspect, the model information further includes signature information, and the signature information is used for verifying the model information.

In a possible implementation of the fifth aspect, the model weights are stored continuously in the protected storage area, and the general-purpose processing apparatus further includes a receiving unit. The receiving unit is configured to receive base addresses that are sent by the data acceleration processing apparatus and that are of the model weights in the plaintext form in the protected storage area; the processing unit is further configured to determine logical addresses of the model weights based on the base addresses and address offset values of the model weights; and the sending unit is further configured to send the logical addresses of the model weights to the data acceleration processing apparatus.

In a possible implementation of the fifth aspect, the sending unit is further configured to send memory configuration information to the data acceleration processing apparatus, where the memory configuration information is used for configuring the unprotected storage area and/or the protected storage area.

According to a sixth aspect, a data acceleration processing apparatus is provided, where the data acceleration processing apparatus includes a processing unit and a storage unit, and the storage unit includes an unprotected storage area and a protected storage area. The storage unit is configured to store model information in the unprotected storage area, where the model information includes model weights in a ciphertext form, and the protected storage area is inaccessible to a general-purpose processing apparatus; the storage unit is further configured to store, in the protected storage area, model weights that are in a plaintext form and that correspond to the model weights in the ciphertext form, where the protected storage area is inaccessible to the general-purpose processing apparatus; the processing unit is configured to obtain a target task sent by the general-purpose processing apparatus based on the model information; the processing unit is further configured to: obtain a first logical address of a target weight, and read the target weight from the protected storage area based on the first logical address, where the target weight is a weight in the model weights that needs to be used when the target task is executed; and the processing unit is further configured to execute the target task based on the target weight.

In a possible implementation of the sixth aspect, the data acceleration processing apparatus further includes a sending unit and a receiving unit. The processing unit is further configured to determine base addresses of the model weights in the plaintext form in the protected storage area; the sending unit is further configured to send the base addresses of the target weight to the general-purpose processing apparatus, where the base addresses are used for determining the first logical address of the target weight; and the receiving unit is configured to receive a first logical address that is of the target weight and that is sent by the general-purpose processing apparatus.

According to a seventh aspect, a data acceleration processing apparatus is provided, where the data acceleration processing apparatus includes an acceleration processor and a storage, the storage stores instructions, and when the acceleration processor runs the instructions, the apparatus is caused to perform the data processing method provided in any one of the first aspect or the possible implementations of the first aspect, or perform the data processing method provided in any one of the third aspect or the possible implementations of the third aspect.

According to an eighth aspect, a general-purpose processing apparatus is provided, where the general-purpose processing apparatus includes a processor and a storage, the storage stores instructions, and when the processor runs the instructions, the apparatus is caused to perform the data processing method provided in any one of the second aspect or the possible implementations of the second aspect.

According to another aspect of this application, an electronic device is provided, where the electronic device includes the data acceleration processing apparatus provided in any one of the foregoing aspects, and the general-purpose processing apparatus provided in any one of the foregoing aspects.

According to another aspect of this application, a terminal device is provided, where the terminal device includes the data acceleration processing apparatus provided in any one of the foregoing aspects, and the general-purpose processing apparatus provided in any one of the foregoing aspects. For example, the terminal device may be a mobile phone, a tablet, a computer, a camera, a wearable device, a vehicle-mounted device, or the like.

According to still another aspect of this application, a computer-readable storage medium is provided, where the computer-readable storage medium stores instructions, and when the instructions are executed by a device, the device is caused to perform the data processing method provided in any one of the first aspect or the possible implementations of the first aspect.

According to still another aspect of this application, a computer-readable storage medium is provided, where the computer-readable storage medium stores instructions, and when the instructions are executed by a device, the device is caused to perform the data processing method provided in any one of the second aspect or the possible implementations of the second aspect.

According to still another aspect of this application, a computer-readable storage medium is provided, where the computer-readable storage medium stores instructions, and when the instructions are executed by a device, the device is caused to perform the data processing method provided in any one of the third aspect or the possible implementations of the third aspect.

According to still another aspect of this application, a computer program product is provided, where the computer program product includes a computer program (which may also be referred to as code or instructions), and when the computer program is run, a computer is caused to perform the data processing method provided in any one of the first aspect or the possible implementations of the first aspect.

According to still another aspect of this application, a computer program product is provided, where the computer program product includes a computer program (which may also be referred to as code or instructions), and when the computer program is run, a computer is caused to perform the data processing method provided in any one of the second aspect or the possible implementations of the second aspect.

According to still another aspect of this application, a computer program product is provided, where the computer program product includes a computer program (which may also be referred to as code or instructions), and when the computer program is run, a computer is caused to perform the data processing method provided in any one of the third aspect or the possible implementations of the third aspect.

It may be understood that, for beneficial effects that can be achieved by any one of the foregoing data acceleration processing apparatus, general-purpose processing apparatus, electronic device, terminal device, computer-readable storage medium, and computer program product, refer to the beneficial effects in the data processing method provided above. Details are not described herein again.

### BRIEF DESCRIPTION OF DRAWINGS

FIG. 1 is a diagram of implementing protection of an AI model in a running period;
FIG. 2 is another diagram of implementing protection of an AI model in a running period;
FIG. 3 is a diagram of a structure of an electronic device according to an embodiment of this application;
FIG. 4 is a diagram of a structure of another electronic device according to an embodiment of this application;
FIG. 5 is a schematic flowchart of a data processing method according to an embodiment of this application;
FIG. 6 is a diagram of model information according to an embodiment of this application;
FIG. 7 is a schematic flowchart of another data processing method according to an embodiment of this application;
FIG. 8 is a diagram of model weights in a plaintext form according to an embodiment of this application;
FIG. 9 is a diagram of model weights in a ciphertext form according to an embodiment of this application;
FIG. 10 is a diagram of data processing according to an embodiment of this application;
FIG. 11 is a diagram of configuring a data acceleration processing apparatus according to an embodiment of this application;
FIG. 12 is a diagram of another data processing according to an embodiment of this application;
FIG. 13 is a schematic flowchart of still another data processing method according to an embodiment of this application;
FIG. 14 is a diagram of a structure of a data acceleration processing apparatus according to an embodiment of this application;
FIG. 15 is a diagram of a structure of another data acceleration processing apparatus according to an embodiment of this application;
FIG. 16 is a diagram of a structure of a general-purpose processing apparatus according to an embodiment of this application; and
FIG. 17 is a diagram of a structure of another general-purpose processing apparatus according to an embodiment of this application.

### DESCRIPTION OF EMBODIMENTS

The following describes the technical solutions in embodiments of this application with reference to the accompanying drawings in embodiments of this application. In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In embodiments of this application, words such as "first" and "second" are used to distinguish between objects with similar names or functions or effect. A person skilled in the art may understand that the words such as "first" and "second" do not limit a quantity and an execution sequence. The term "coupling" is used for representing an electrical connection, including a direct connection through a wire or a connection end or an indirect connection through another device. Therefore, "coupling" should be considered as a generalized electronic communication connection.

It should be noted that in this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, the words such as "example" or "for example" are intended to present a relative concept in a specific manner.

Before embodiments of this application are described below, related background technologies in this application are first described.

With popularization and application of artificial intelligence (artificial intelligence, AI) in various industries, protection of an AI model becomes increasingly important. The protection of the AI model may mainly include protection in three phases: storage, transmission, and running, and how to implement protection in the running phase has always been a difficult issue in the industry. In a related technology, the protection of the AI model in the running phase is usually implemented in the following two manners, and the protection in the running phase may also be referred to as protection in a running period.

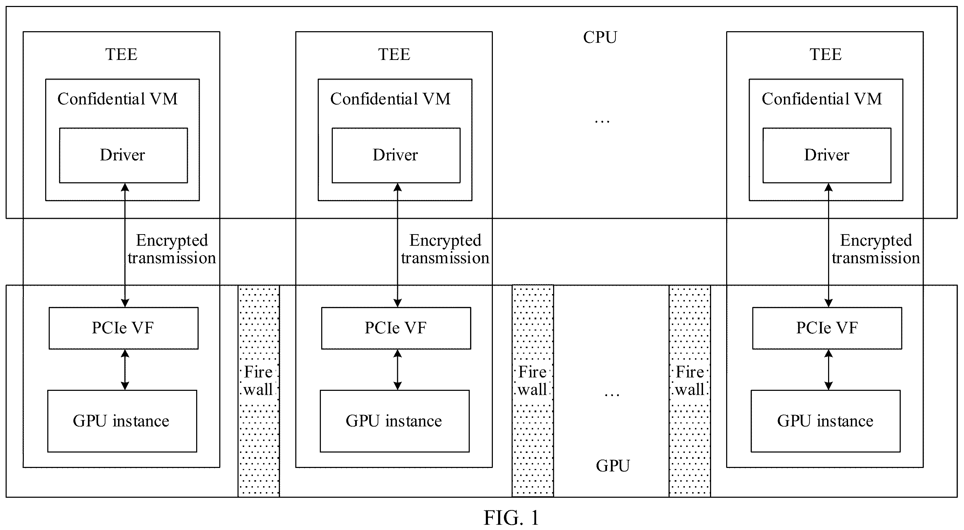

In a first manner, an electronic device having a confidential computing (confidential computing) capability is used. As shown in FIG. 1, for example, the electronic device includes a central processing unit (central processing unit, CPU) and a graphics processing unit (graphics processing unit, GPU), and the CPU and the GPU are connected through a peripheral component interconnect express (peripheral component interconnect express, PCIe) bus. The CPU is required to support a trusted execution environment (trusted execution environment, TEE) capability, the GPU is required to support a multi-instance isolation capability, and the PCIe bus is required to support encryption and decryption transmission capabilities. Specifically, one confidential (confidential) virtual machine (virtual machine, VM) is configured in each TEE of the CPU, a GPU driver is configured in the confidential VM, and the driver performs encrypted transmission through the PCIe bus. The GPU includes a secure (secure) GPU instance (instance) isolated by using a firewall (firewall). Each secure GPU instance is correspondingly configured with one PCIe virtual function (virtual function, VF). The PCIe VF may be used for supporting the secure GPU instance in transmission through the PCIe bus. Therefore, in the electronic device, one confidential VM in the CPU, one secure GPU instance in the GPU, and one corresponding PCIe VF may form a hardware isolation environment (or referred to as a secure environment) across the CPU and the GPU, so as to ensure security of a running AI model.

In the foregoing solution, the CPU may be configured to: process an input of an AI application, load a model file, and the like; the GPU may be configured to execute a corresponding AI computing task; and the PCIe bus may be configured to perform transmission of an interactive data flow between the CPU and the GPU. That is, this solution covers three parts of a data flow design. Part 1: A TEE isolation capability is used on the CPU. In this way, a non-secure environment cannot access the AI application and the AI model. By connecting to a remote attestation server or local attestation, it can be ensured that an environment of the GPU connected to the TEE can satisfy a requirement on a running status. For example, a firmware version is correct. Part 2: The running status on the GPU can be measured, and sensed by the CPU. Multi-instance isolation provides a hardware isolation capability, to ensure that an AI computing task in the secure environment is isolated from an AI computing task in the non-secure environment, and the two tasks do not affect each other. Part 3: The encrypted transmission is used for the PCIe bus, to ensure confidentiality and integrity of the data flow between the CPU and the GPU.

However, this solution imposes a high requirement on hardware of the electronic device. For example, the hardware of the electronic device is required to support the isolation capability and the encryption and decryption transmission capabilities. Therefore, it is difficult to apply the solution to an existing related product (for example, an electronic device or a chip) in the market. In other words, a capability of the AI model protection in the running period cannot be implemented only by using software enhancement, so that this solution is limited in usage.

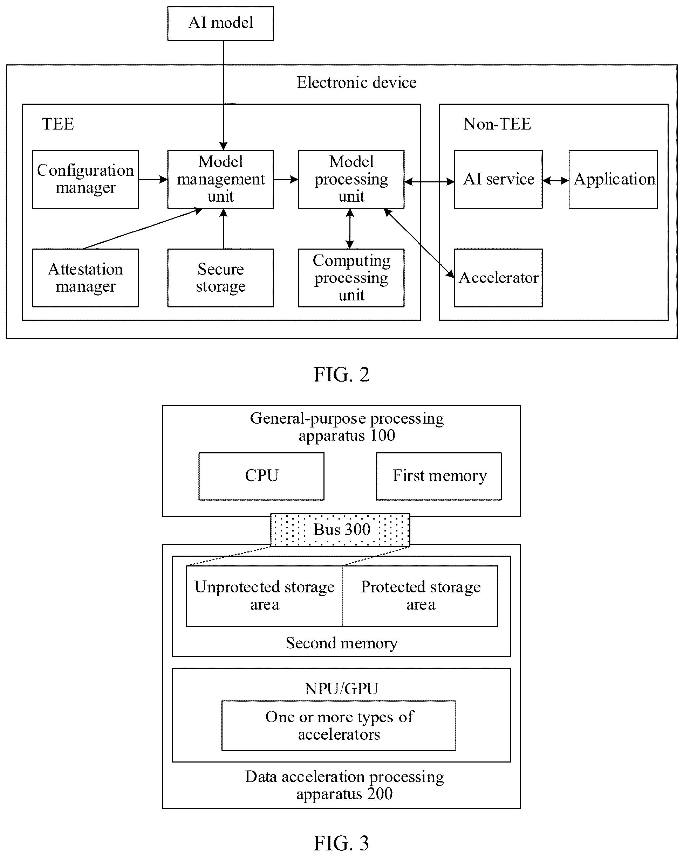

In a second manner, a model-related operation unit abstracted from the TEE and existing computing and storage resources in the TEE are used for implementing parameter protection of the AI model in the running period. Specifically, as shown in FIG. 2, the electronic device includes a trusted execution environment TEE and a non-trusted execution environment non-TEE. The TEE includes a configuration manager (configuration manager), a model processing unit (model processor), a model management unit (model manager), an attestation manager (attestation manager), a secure storage (secure storage), and a computing processing unit (computation processor). The non-TEE includes an AI service (AI service), an application (application), and an accelerator (accelerator). The model management unit may be configured to communicate with the configuration manager, the model processing unit, the attestation manager, and the secure storage. The model processing unit may be configured to: communicate with the AI service, and schedule the computing processing unit and the accelerator to perform corresponding computation. The AI model in the electronic device may be configured after development and training.

In the foregoing solution, a software stack is greatly changed, and related information that is about the AI model and that is sent between the model processing unit and the accelerator is not protected.

In view of this, embodiments of this application provide a data processing method. The method may be used for still protecting the security of the AI model in an offline inference running process without using a hardware isolation technology, for example, the TEE, to prevent theft. The method may be applied to an electronic device. The electronic device includes but is not limited to a mobile phone, a tablet, a notebook computer, a palmtop computer, a mobile internet device (mobile internet device, MID), a wearable device (for example, a smartwatch or a smart band), a vehicle-mounted device (for example, a car, a bicycle, an electric vehicle, an aircraft, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electricity meter), a smart robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, a smart robot, a hot air balloon, an uncrewed aerial vehicle, or an aircraft), or the like. The electronic device may also be referred to as a terminal device.

The following describes a specific structure of the electronic device.

FIG. 3 is a diagram of a structure of an electronic device according to an embodiment of this application. The electronic device includes a general-purpose processing apparatus 100, a data acceleration processing apparatus 200, and a bus 300. The general-purpose processing apparatus 100 is coupled to the data acceleration processing apparatus 200 through the bus 300. The general-purpose processing apparatus 100 may refer to an apparatus that has capabilities such as general-purpose data processing, instruction or command execution, and task delivery. The general-purpose processing apparatus 100 may also be referred to as a host (host), a general-purpose server, a primary device, or the like. The data acceleration processing apparatus 200 may refer to an apparatus that has a data acceleration processing capability. The data acceleration processing apparatus 200 may also be referred to as a device (device), a dedicated processing apparatus, a secondary device, or the like.

The general-purpose processing apparatus 100 may include one or more general-purpose processors. The general-purpose processor may include but is not limited to a central processing unit CPU, a digital signal processor (digital signal processor, DSP), a microcontroller, a microprocessor, or the like. The general-purpose processor may be configured to: perform various functions of the electronic device, process data, and the like, to perform overall monitoring on the electronic device, for example, configured to process an operating system, a user interface, and an application program of the electronic device. In some embodiments, the general-purpose processing apparatus 100 may further include a storage (for example, a memory or an external storage). The storage may be configured to store data, a software program, and a module related to the general-purpose processing apparatus 100. For example, the software program may include an inference framework. For example, the storage may include a program storage area and a data storage area. The program storage area may store the software program, including instructions formed by code, and including but not limited to an operating system and an application program required for at least one function, for example, a sound playback function and an image playback function. The data storage area may store data created based on use of the electronic device, for example, audio data, image data, and text data. In FIG. 3, an example in which the general-purpose processing apparatus 100 includes a CPU and a first memory is used for description. The first memory may be a DRAM, a DDR, another storage, or the like.

The data acceleration processing apparatus 200 may include one or more acceleration processors. The one or more acceleration processors may include but are not limited to a graphics processing unit (graphics processing unit, GPU), a neural network processing unit (neural network processing unit, NPU), a DSP, a CPU, an application-specific integrated circuit (application-specific integrated circuit, ASIC), a complex programmable logic device (complex programmable logic device, CPLD), and the like. The acceleration processor may include one or more types of accelerators (such as a vector computing unit, a matrix computing unit, and/or a scalar computing unit) and one or more types of operators (such as a decryption operator AICPU or another customized operator). The acceleration processor may be configured to perform corresponding computing (for example, vector computing, matrix computing, and/or scalar computing) under invocation of the general-purpose processing apparatus 100. In some embodiments, the data acceleration processing apparatus 200 may further include a storage. The storage may be configured to store data, a software program, a module, and the like related to the data acceleration processing apparatus 200. For example, the software program may include firmware (firmware). In an example, the storage in the data acceleration processing apparatus 200 may include a second memory, and the second memory may include an unprotected storage area accessible to the general-purpose processing apparatus 100 and a protected storage area inaccessible to the general-purpose processing apparatus 100. Further, the storage may further include a persistent storage, a one-time programmable storage (electrically programmable fuse), and the like. For example, the persistent storage may include a flash memory (flash), and the flash memory may be configured to store a decryption key, a public key for signature verification, and/or the like in the following. The one-time programmable storage is a storage that is allowed to be written only once (or is referred to as allowed to be programmed only once). In embodiments of this application, the one-time programmable storage may be configured to store a hardware unique key (hardware unique key, HUK) in the following. In FIG. 3, an example in which the data acceleration processing apparatus 200 includes the NPU and the second memory is used for description.

It may be understood that the memory (for example, the first memory and the second memory) in embodiments of this application may refer to an internal storage in a corresponding apparatus, and may be configured to temporarily store data in a running process of a processor (for example, the general-purpose processor and the acceleration processor) of the corresponding apparatus. The memory has high access efficiency and a small capacity, and the stored data is usually lost after a power failure. The persistent storage and the one-time programmable storage may refer to external storages, and may be used for storing data for long time. The persistent storage and the one-time programmable storage have low access efficiency and a large capacity, and the stored data is not lost after a power failure. The persistent storage may be a storage that supports writing for a plurality of times, and the one-time programmable storage is a storage that is allowed to be written only once.

The bus 300 may be configured to perform information transmission between the general-purpose processing apparatus 100 and the data acceleration processing apparatus 200, to implement communication between the general-purpose processing apparatus 100 and the data acceleration processing apparatus 200. In some embodiments, the bus 300 may be a PCIe bus, an extended industry standard architecture (extended industry standard architecture, EISA) bus, or the like.

Although not shown, other components such as a sensor component (for example, an acceleration sensor, a gyroscope sensor, a pressure sensor, and/or a temperature sensor), a multimedia component (for example, a display panel and a camera), an input/output device (for example, a mouse and a keyboard), a communication module (for example, a Bluetooth module and a Wi-Fi module), and a power supply component may be further included in the general-purpose processing apparatus 100. Details are not described in this embodiment of this application.

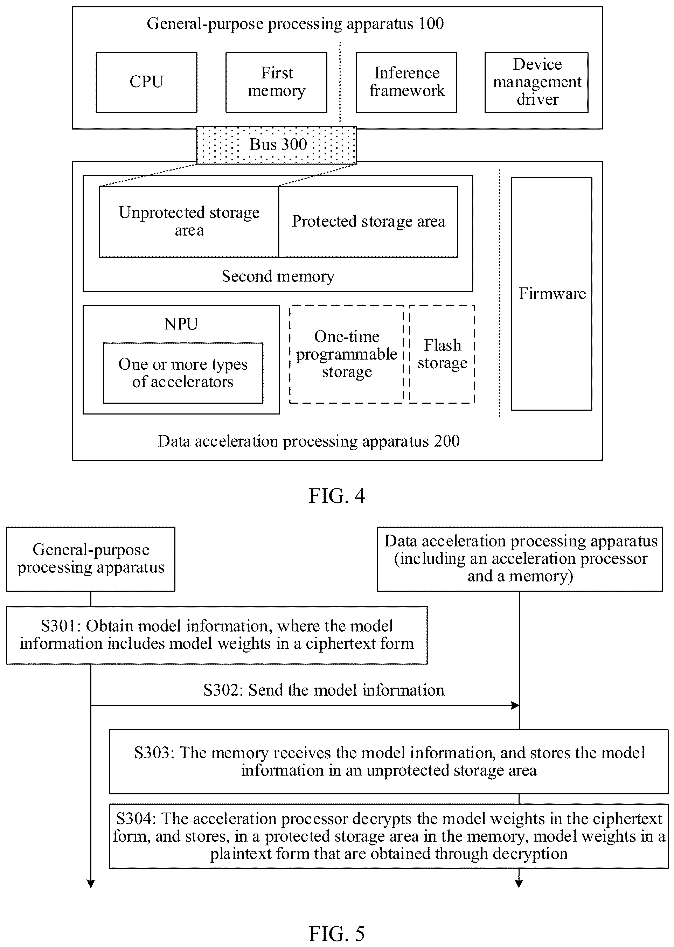

Further, the electronic device includes the foregoing hardware resources, and may further include a software architecture running on the foregoing hardware resources (for example, the processor and the storage). In some embodiments of this application, a software architecture of the general-purpose processing apparatus 100 in the electronic device may include an application program layer (for example, an AI application), an application program framework layer, a function library layer, a kernel layer, and the like. In an example, as shown in FIG. 4, the software architecture may include an inference framework and a device management driver. The inference framework may be located at the foregoing application program framework layer, and the inference framework may be configured to provide various APIs used by an application program for access. The device management driver may be located at the foregoing kernel layer, and the device management driver may be adapted to configure the second memory in the data acceleration processing apparatus 200, for example, adapted to configure the protected storage area and the unprotected storage area. In some other embodiments of this application, as shown in FIG. 4, the data acceleration processing apparatus 200 may alternatively include a corresponding software architecture. For example, the software architecture may include firmware running on an acceleration processor.

It may be understood that the hardware resources and the software architecture of the electronic device shown in FIG. 3 and FIG. 4 are merely examples. In actual application, the electronic device may further include software or components that are more than those shown in the figure or that are different from those shown in the figure. The foregoing examples constitute no limitation on embodiments of this application.

FIG. 5 is a schematic flowchart of a data processing method according to an embodiment of this application. The method includes the following several steps. The data processing method may be applied to the electronic device provided above, and the electronic device includes a general-purpose processing apparatus and a data acceleration processing apparatus. The following uses an example in which the general-purpose processing apparatus includes the general-purpose processor (for example, the CPU) and the first memory, and the data acceleration processing apparatus includes the acceleration processor (for example, the NPU) and the second memory for description.

S301: The general-purpose processing apparatus obtains model information, where the model information includes model weights in a ciphertext form.

The model information may be model information about an AI model. The model information may be stored in the first memory in the general-purpose processing apparatus. The model weights (weights) in the ciphertext form in the model information may refer to encrypted model weights. Optionally, the model information may further include a plurality of computing tasks. The model weights include weights that need to be used for the plurality of computing tasks in computing processes. The plurality of computing tasks may be in plaintext in the model information, and the plurality of computing tasks may be specifically computing tasks that need to be executed by scheduling the data acceleration processing apparatus. For example, the plurality of computing tasks may be AI computing tasks. Optionally, the model information may further include another parameter other than the model weights, for example, an input parameter and an output parameter that are needed for the model. The another parameter may also be in a ciphertext form. In this embodiment of this application, an example in which the model weights are in the ciphertext form is used for description.

In a possible embodiment, the model information is stored in the first memory in the general-purpose processing apparatus, and the general-purpose processor in the general-purpose processing apparatus may obtain the model information from the first memory. Further, the general-purpose processor in the general-purpose processing apparatus may further parse and convert the model information, so that the converted model information can be identified and processed by the data acceleration processing apparatus.

Optionally, the model weights may be stored continuously in the first memory, and may be arranged according to a computing sequence in the plurality of computing tasks. The model weights may include a plurality of weights, and an arrangement sequence of the plurality of weights in the first memory is consistent with a computing sequence of the plurality of weights in the plurality of computing tasks.

In addition, the model information may further include computational graph (graph) information in plaintext, where the computational graph information may include a plurality of compute nodes and a computing sequence corresponding to the plurality of compute nodes. The plurality of weights in the model weights may include weights used by the plurality of compute nodes in computing processes. The plurality of computing tasks may also be referred to as a plurality of computing tasks corresponding to the computational graph information. Therefore, the arrangement sequence of the model weights in the first memory may also be consistent with the computing sequence of the model weights in the computational graph information.

Optionally, the model information may further include signature information. The signature information may be used for verifying other information (for example, the computational graph information, the model weights, and the computing task) in the model information other than the signature information, to ensure integrity of the model information. For example, the signature information may be obtained by performing computing on the other information in the model information other than the signature information by using a preset algorithm.

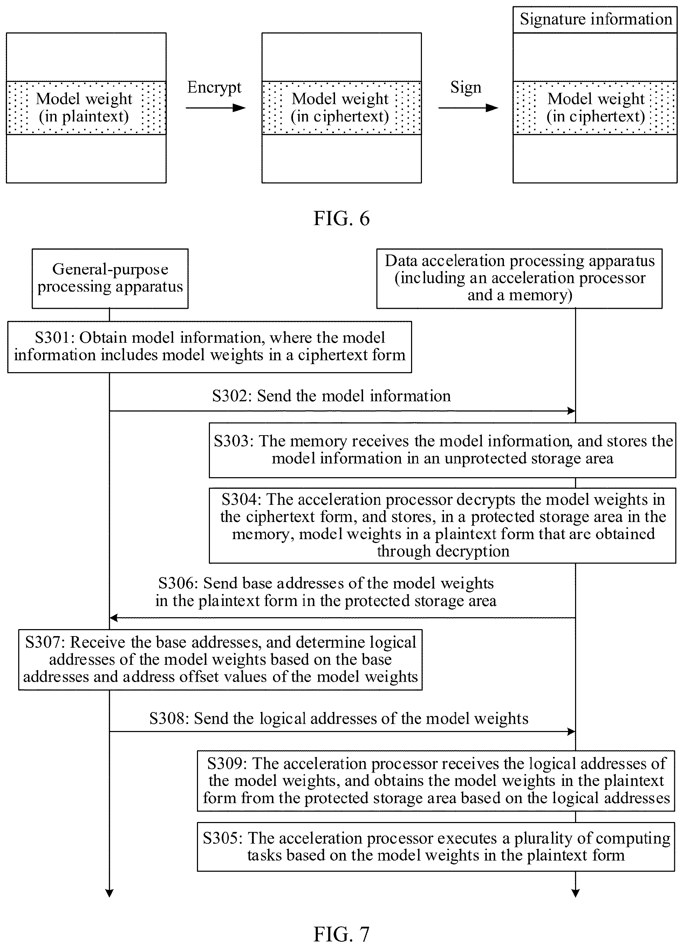

In a possible embodiment, the model weights in the ciphertext form and the signature information that are in the model information may be generated in a development environment. For example, as shown in FIG. 6, when model information is obtained through development in a development environment, model weights in a plaintext form in the model information may be encrypted, to obtain the model information including model weights in a ciphertext form; and then, the model information obtained through encryption is signed, to obtain the model information including signature information and the model weights in the ciphertext form.

It may be understood that, that the model weights in the model information are encrypted and that the encrypted model information is signed in the development environment are merely examples. In actual application, alternatively, the model weights may not be encrypted and the signature may not be performed after the encryption in the development environment, but the encryption and the signature are performed in a subsequent configuration process. The foregoing example does not constitute a limitation on this embodiment of this application.

Further, before obtaining the model information, the general-purpose processing apparatus may further first load the model information to the first memory. In a possible embodiment, the general-purpose processing apparatus may include an external storage, and the model information may be configured (or referred to as stored) in the external storage after development. In this way, the general-purpose processor in the general-purpose processing apparatus may load the model information from the external storage to the first memory.

Optionally, if the model weights are not encrypted and the signature is not performed after the encryption in the development environment, in a process of configuring the model information in the external storage, the model weights in the model information may be encrypted, and the model information obtained through encryption may be signed.

S302: The general-purpose processing apparatus sends the model information to the data acceleration processing apparatus.

In a possible embodiment, the general-purpose processing apparatus may transmit the model information to the data acceleration processing apparatus through the bus. For example, the bus may be a PCIe bus. When the CPU of the general-purpose processing apparatus obtains the model information, the CPU of the general-purpose processing apparatus may send the model information to the data acceleration processing apparatus through the PCIe bus, or directly store the model information in the second memory in the data acceleration processing apparatus through the bus, specifically, may store the model information in an unprotected storage area in the second memory. The unprotected storage area is accessible to the general-purpose processing apparatus. For example, the CPU of the general-purpose processing apparatus may copy the model information from the general-purpose processing apparatus to the unprotected storage area in the second memory in the data acceleration processing apparatus.

S303: The second memory in the data acceleration processing apparatus receives the model information, and stores the model information in the unprotected storage area in the second memory.

The second memory may include the unprotected storage area accessible to the general-purpose processing apparatus, which may also be referred to as an unprotected storage area in which the general-purpose processing apparatus can perform an operation. That is, the general-purpose processing apparatus can perform read and write in the unprotected storage area. In a possible embodiment, when the second memory in the data acceleration processing apparatus receives the model information through the bus, the second memory in the data acceleration processing apparatus may store the model information in the unprotected storage area; or the acceleration processor in the data acceleration processing apparatus may copy the model information from the general-purpose processing apparatus in a direct memory access (direct memory access, DMA) manner, and store the model information in the unprotected storage area.

In addition, the model information stored in the unprotected storage area may include the model weights in the ciphertext form. Further, the model information stored in the unprotected storage area may further include at least one of the plurality of computing tasks and the computational graph information, and the plurality of computing tasks and the graph computational information may be in the plaintext form.

Optionally, the model information may further include the signature information. When the second memory in the data acceleration processing apparatus stores the model information in the unprotected storage area, the data acceleration processing apparatus may further perform signature verification on the model information according to a public key for signature verification. In a possible embodiment, the data acceleration processing apparatus further includes a persistent storage, the persistent storage stores the public key for signature verification, and that the acceleration processor in the data acceleration processing apparatus performs signature verification on the signature information in the model information may specifically include: The acceleration processor obtains the public key for signature verification from the persistent storage, and determines, according to the public key for signature verification, that the signature information in the model information is successfully verified.

Optionally, the public key for signature verification may be stored in the persistent storage in an encrypted manner. In this way, after obtaining the public key for signature verification, the general-purpose processing apparatus may first decrypt the public key for signature verification. A key used for decrypting the public key for signature verification may be a derivation key of a hardware unique key HUK. The HUK may be stored in a one-time programmable storage.

In a possible example, the general-purpose processing apparatus may decrypt the encrypted public key for signature verification according to the derivation key of the HUK, to obtain the decrypted public key for signature verification. In another possible example, when the public key for signature verification is configured in the persistent storage in the data acceleration processing apparatus, the public key for signature verification may be encrypted according to the derivation key of the HUK, and then the encrypted public key for signature verification is stored in the persistent storage.

S304: The acceleration processor in the data acceleration processing apparatus decrypts the model weights in the ciphertext form, and stores, in a protected storage area in the second memory, the model weights in the plaintext form that are obtained through decryption, where the protected storage area is inaccessible to the general-purpose processing apparatus.

The second memory may further include the protected storage area inaccessible to the general-purpose processing apparatus, which may also be referred to as a protected storage area in which the general-purpose processing apparatus cannot perform an operation. That is, the general-purpose processing apparatus cannot perform read and write in the protected storage area.

In addition, the model weights in the model information are in the ciphertext form, and the acceleration processor in the data acceleration processing apparatus may decrypt the model weights in the ciphertext form that are stored in the unprotected storage area, to obtain the model weights in the plaintext form. To protect security of the model weights in the plaintext form, the acceleration processor in the data acceleration processing apparatus may further store, in the protected storage area inaccessible to the general-purpose processing apparatus, the model weights in the plaintext form.

Optionally, a specific process in which the acceleration processor in the data acceleration processing apparatus decrypts the model weights in the ciphertext form may be performed by a corresponding accelerator or operator. For example, the data acceleration processing apparatus may include a decryption operator AICPU, and the decryption operator AICPU may be configured to decrypt the model weights in the ciphertext form. In addition, a TEE environment is further disposed in the data acceleration processing apparatus, and the process in which the data acceleration processing apparatus decrypts the model weights in the ciphertext form may be performed in the TEE environment.

Further, in a possible embodiment, the data acceleration processing apparatus further includes a persistent storage. For example, the persistent storage may include a flash memory, and the persistent storage stores a decryption key. Correspondingly, that the acceleration processor in the data acceleration processing apparatus decrypts the model weights in the ciphertext form may specifically include: The acceleration processor obtains the decryption key from the persistent storage, and decrypts the model weights in the ciphertext form according to the decryption key, to obtain the model weights in the plaintext form. The decryption key may be configured in the persistent storage. For example, in a process of configuring the model information in the external storage in the general-purpose processing apparatus, the decryption key may be configured in the persistent storage in the data acceleration processing apparatus.

Optionally, the decryption key may be stored in the persistent storage in an encrypted manner. In this way, after obtaining the decryption key, the acceleration processor in the data acceleration processing apparatus may first decrypt the decryption key. A key used for decrypting the decryption key may be the derivation key of the HUK. The data acceleration processing apparatus further includes the one-time programmable storage, and the HUK may be stored in the one-time programmable storage.

In a possible example, the acceleration processor in the data acceleration processing apparatus may decrypt the encrypted decryption key according to the derivation key of the HUK, to obtain the decrypted decryption key. In another possible example, when the decryption key is configured in the persistent storage in the data acceleration processing apparatus, the decryption key may be encrypted according to the derivation key of the HUK, and then the encrypted decryption key is stored in the persistent storage.

After the acceleration processor in the data acceleration processing apparatus stores, in the protected storage area in the second memory, the model weights in the plaintext form that are obtained through decryption, as shown in FIG. 7, the method may further include S305.

S305: The acceleration processor in the data acceleration processing apparatus executes, based on the model weights in the plaintext form, the plurality of computing tasks corresponding to the model information.

When the acceleration processor in the data acceleration processing apparatus obtains the model weights in the plaintext form through decryption, the acceleration processor may execute the plurality of computing tasks based on the model weights. Optionally, after completing the plurality of computing tasks, the data acceleration processing apparatus may further return computing results corresponding to the plurality of computing tasks to the general-purpose processing apparatus.

In this embodiment of this application, the general-purpose processing apparatus may transmit the model information to the data acceleration processing apparatus through the bus, and the model weights in the model information are in the ciphertext form, thereby ensuring security of the model weights in the general-purpose processing apparatus and security in a transmission process. In addition, after decrypting the model weights in the ciphertext form, the data acceleration processing apparatus stores, in the protected storage area inaccessible to the general-purpose processing apparatus, the model weights in the plaintext form that are obtained through decryption. That is, the model weights in the plaintext form are inaccessible to the general-purpose processing apparatus. In this way, when the data acceleration processing apparatus executes the computing task based on the model weights in the plaintext form, security of the model weights can be ensured during execution. Therefore, in comparison with a related technology, this embodiment of this application can be used for still protecting security of the model information in a running process without using a hardware isolation technology, for example, a TEE, so as to prevent the model information from being theft.

Further, as shown in FIG. 7, before S305, the method further includes S306 to S309.

S306: The acceleration processor in the data acceleration processing apparatus sends, to the general-purpose processing apparatus, base addresses of the model weights in the plaintext form in the protected storage area.

The model weights in the plaintext form may be stored continuously in the protected storage area, and may be arranged according to the computing sequence in the plurality of computing tasks. For example, the model weights may include the plurality of weights, and an arrangement sequence of the plurality of weights in the protected storage area is consistent with the computing sequence of the plurality of weights in the plurality of computing tasks. The base address may also be referred to as a head address, and is specifically a logical address of a 1^{st} weight in the plurality of weights included in the model weights. The logical address may refer to an address that is used by a processor (for example, the acceleration processor) to search for data when the processor is configured to access the data.

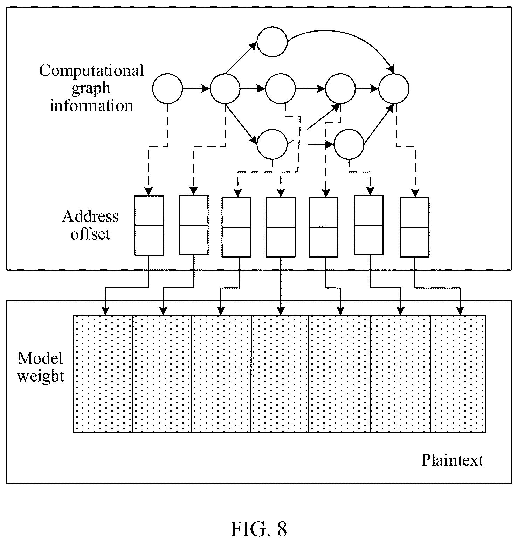

For example, an example in which the computational graph information in the model information includes the plurality of compute nodes and the computing sequence corresponding to the plurality of compute nodes, the model weights include the plurality of weights, and the plurality of weights are weights used by the plurality of compute nodes in the computing processes is used. In this case, the arrangement sequence of the model weights in the plaintext form in the protected storage area may be shown in FIG. 8.

In a possible embodiment, after storing the model weights in the plaintext form in the protected storage area, the acceleration processor in the data acceleration processing apparatus may determine, based on a location of the 1^{st} weight in the model weights in the protected storage area, the base addresses of the model weights in the plaintext form in the protected storage area, and send the base addresses to the general-purpose processing apparatus through the bus.

S307: The general-purpose processing apparatus receives the base addresses that are sent by the data acceleration processing apparatus and that are of the model weights in the plaintext form in the protected storage area, and determines logical addresses of the model weights based on the base addresses and address offset values of the model weights.

The model weights in the ciphertext form in the general-purpose processing apparatus are also stored continuously, and are arranged according to a computing sequence in the plurality of computing tasks. For example, the model weights may include a plurality of weights, and an arrangement sequence of the plurality of weights in the general-purpose processing apparatus is consistent with a computing sequence of the plurality of weights in the computing tasks. The address offset values of the model weights may include an address offset value of any one of the plurality of weights. Using an i^{th} weight in the plurality of weights as an example, an address offset value of the i^{th} weight may refer to an offset value between an i^{th} logical address of the i^{th} weight and a base address corresponding to a 1^{st} weight, where i is an integer.

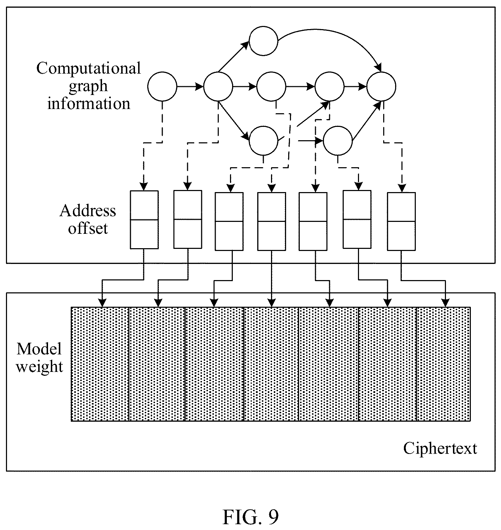

For example, an example in which the computational graph information in the model information includes the plurality of compute nodes and the computing sequence corresponding to the plurality of compute nodes, the model weights include the plurality of weights, and the plurality of weights are weights used by the plurality of compute nodes in the computing processes is used. In this case, the arrangement sequence of the model weights in the ciphertext form in the general-purpose processing apparatus may be shown in FIG. 9.

When the model weights in the ciphertext form are stored continuously in the first memory in the general-purpose processing apparatus, the general-purpose processing apparatus may determine the address offset value of any one of the model weights according to the arrangement sequence in which the model weights in the ciphertext form are stored. An address offset value of a weight may be an offset value between a logical address of the weight and a base address corresponding to a 1^{st} weight in an arrangement sequence of model weights.

In a possible embodiment, when the general-purpose processing apparatus receives the base addresses of the model weights in the plaintext form in the protected storage area, the general-purpose processing apparatus may determine the logical addresses of the weights in the protected storage area based on the base addresses and the address offset value of any weight in the model weights.

S308: The general-purpose processing apparatus sends the logical addresses of the model weights to the data acceleration processing apparatus.

When the general-purpose processing apparatus determines a logical address of each weight in the model weights, the general-purpose processing apparatus may send, to the data acceleration processing apparatus through the bus, the logical address of each weight in the model weights. In a possible embodiment, the general-purpose processing apparatus may sequentially send, to the data acceleration processing apparatus according to a sequence in which the data acceleration processing apparatus executes the foregoing plurality of computing tasks, logical addresses of weights that need to be used when each computing task in the model weights is executed.

S309: The acceleration processor in the data acceleration processing apparatus receives the logical addresses of the model weights, and obtains the model weights in the plaintext form from the protected storage area based on the logical addresses.

When the acceleration processor in the data acceleration processing apparatus receives the logical address of each weight in the model weights, when executing the plurality of computing tasks, the acceleration processor in the data acceleration processing apparatus may obtain the corresponding model weights in the plaintext form from the protected storage area based on the logical addresses, and execute the plurality of computing tasks based on the model weights in the plaintext form.

In another possible embodiment, the acceleration processor in the data acceleration processing apparatus may alternatively determine the logical addresses of the model weights in the following manner: The general-purpose processing apparatus sends the address offset values of the model weights to the data acceleration processing apparatus through the bus; and the acceleration processor in the data acceleration processing apparatus receives the address offset values of the model weights through the bus, and determines the logical addresses of the model weights based on the base addresses of the model weights in the plaintext form in the protected storage area and the address offset values.

Further, the unprotected storage area and the protected storage area may be configured in advance by a person skilled in the art. Optionally, the protected storage area may be a storage area that is obtained through static division and that has continuous physical addresses, and a capacity of the protected storage area is configurable.

For example, the unprotected storage area accessible to the general-purpose processing apparatus is pre-configured in the second memory, and in this case, a storage area other than the unprotected storage area in the second memory may be the protected storage area; the protected storage area inaccessible to the general-purpose processing apparatus is pre-configured in the second memory, and in this case, a storage area other than the protected storage area in the second memory may be the unprotected storage area; or both the unprotected storage area and the protected storage area are configured in the second memory.

In a possible embodiment, the bus includes a management channel. Before the general-purpose processing apparatus obtains the model information, the general-purpose processing apparatus may further send memory configuration information to the data acceleration processing apparatus through the management channel. The memory configuration information is used for configuring the unprotected storage area and/or the protected storage area. In this way, the acceleration processor in the data acceleration processing apparatus may receive the memory configuration information through the management channel, and configure the unprotected storage area and/or the protected storage area in the second memory based on the memory configuration information. The following describes related content of configuring the protected storage area.

When the unprotected storage area and the protected storage area are configured, the second memory in the data acceleration processing apparatus may be cleared first. That is, data in the second memory is cleared, so as to prevent leakage of residual data in the second memory.

In addition, a size of the protected storage area is configured by using the management channel, and a storage area that is obtained through static division and that has the continuous physical addresses is used as the protected storage area.

Further, address mapping is performed after the protected storage area is configured. An address of the protected storage area does not participate in the address mapping corresponding to the bus. For example, the bus is the PCIe bus, and a page table corresponding to the PCIe bus (which may also be referred to as a PCIe page table) does not include the address mapping of the protected storage area. Therefore, the protected storage area is inaccessible to the general-purpose processing apparatus through the bus. When a page table of the acceleration processor in the data acceleration processing apparatus is mapped, both the address of the protected storage area and an address of the unprotected storage area may participate in mapping. That is, the page table corresponding to the acceleration processor in the data acceleration processing apparatus includes both the address mapping of the protected storage area and the address mapping of the unprotected storage area. In this way, it is ensured that the unprotected storage area and the protected storage area are accessible to the acceleration processor in the data acceleration processing apparatus.

In addition, when the unprotected storage area and the protected storage area are configured, if there is another service running in the electronic device, the device may be further reset to forcibly interrupt execution of the service.

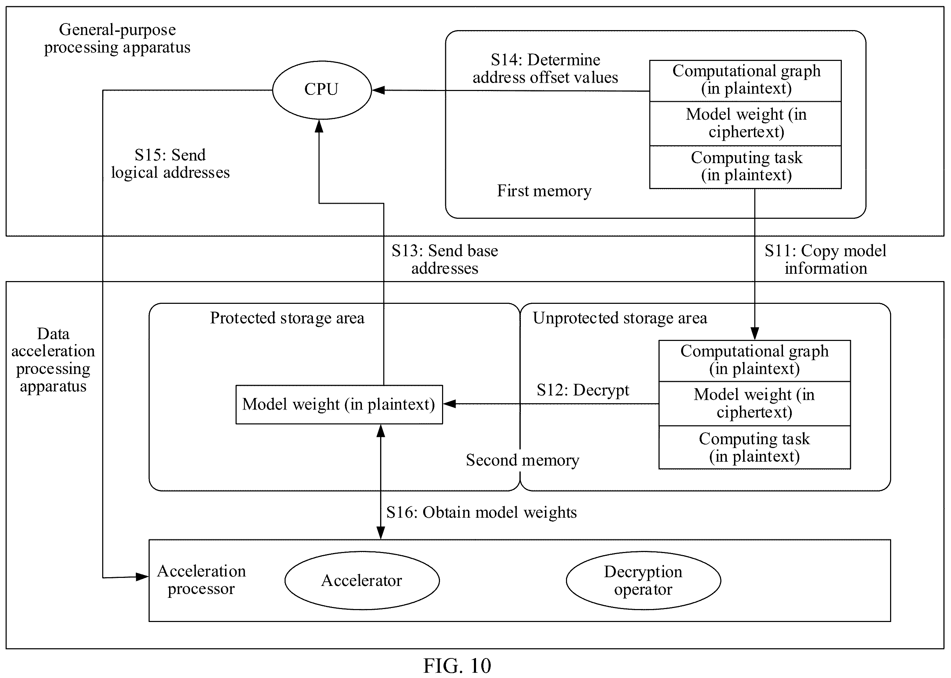

In the foregoing embodiment, the technical solutions in embodiments of this application are described from a perspective of interaction between the general-purpose processing apparatus and the data acceleration processing apparatus. In actual application, steps corresponding to the general-purpose processing apparatus may be implemented by the processor in the general-purpose processing apparatus and an inference framework running on the processor, and steps corresponding to the data acceleration processing apparatus may be implemented by the acceleration processor in the data acceleration processing apparatus and firmware running on the acceleration processor. For ease of understanding, the following describes the technical solutions in embodiments of this application by using electronic device structures shown in FIG. 10 to FIG. 12 as examples. In FIG. 10 to FIG. 12, an example in which a processor in a general-purpose processing apparatus includes a CPU is used for description.

In an example, as shown in FIG. 10, the general-purpose processing apparatus includes the CPU and a first memory, a data acceleration processing apparatus includes an acceleration processor and a second memory, the second memory includes a protected storage area and an unprotected storage area, and the acceleration processor includes a plurality of accelerators and a decryption operator AICPU. Correspondingly, a method may include: S11: The CPU of the general-purpose processing apparatus copies model information to the unprotected storage area in the data acceleration processing apparatus through a bus, where the model information includes computational graph information (in plaintext), model weights (in ciphertext), and a computing task (in plaintext); S12: The acceleration processor in the data acceleration processing apparatus schedules the decryption operator AICPU to decrypt the model weights, and stores decrypted model weights (in plaintext) in the protected storage area in the memory in the data acceleration processing apparatus; S13: The acceleration processor in the data acceleration processing apparatus sends, to the general-purpose processing apparatus through the bus, base addresses of the model weights in the protected storage area; S14: When receiving the base addresses, the CPU of the general-purpose processing apparatus determines address offset values of the model weights; S15: The CPU of the general-purpose processing apparatus determines logical addresses of the model weights based on the base addresses and the address offset values, and sends the logical addresses to the data acceleration processing apparatus through the bus; and S16: The acceleration processor in the data acceleration processing apparatus obtains the model weights from the protected storage area based on the logical addresses, and executes the computing task based on the model weights.

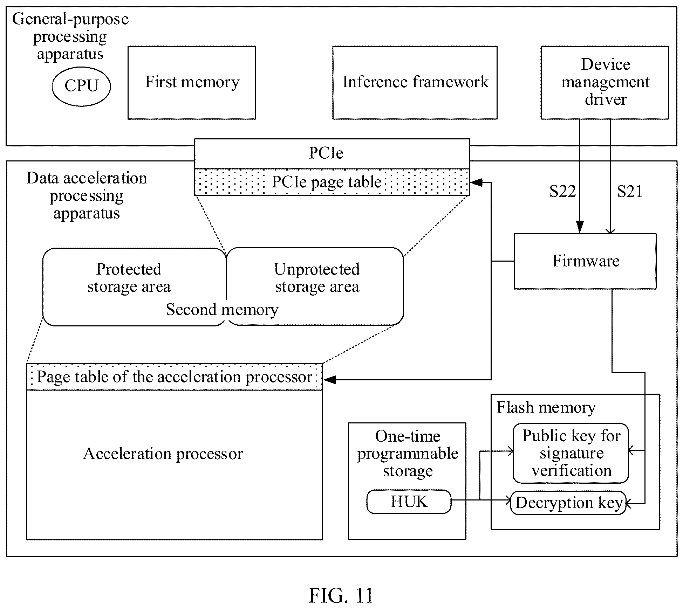

In another example, with reference to FIG. 10, as shown in FIG. 11, the general-purpose processing apparatus is coupled to the data acceleration processing apparatus through a PCIe bus, the general-purpose processing apparatus further includes an inference framework and a device management driver, and the data acceleration processing apparatus further includes a flash memory, a one-time programmable storage, and firmware. Correspondingly, the method may further include: S21: Configure the data acceleration processing apparatus by using the device management driver, where the configuration may include: configuring a decryption key and a public key for signature verification in the flash memory, and performing encryption protection on the decryption key and the public key for signature verification according to a derivation key of an HUK in the one-time programmable storage; and S22: Configure the protected storage area in the memory in the data acceleration processing apparatus by using the device management driver, where only address mapping of the unprotected storage area is in a PCIe page table, and address mapping of both the unprotected storage area and the protected storage area is in a page table of the acceleration processor in the data acceleration processing apparatus.

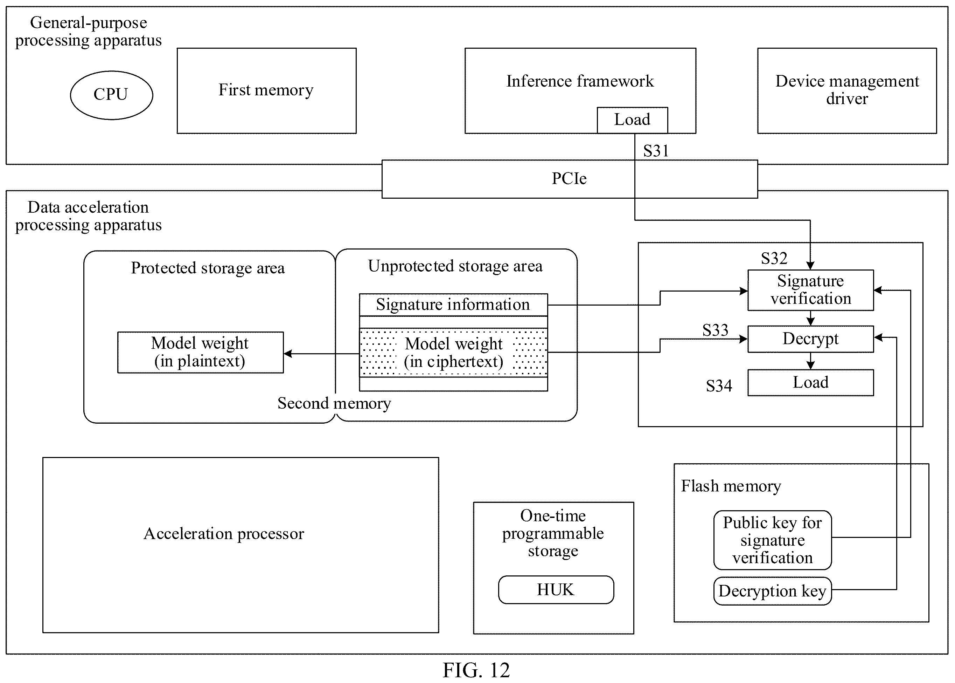

In still another example, with reference to FIG. 11, as shown in FIG. 12, the method may further include: S31: The inference framework in the general-purpose processing apparatus loads the model information, and copies the model information to the unprotected storage area in the data acceleration processing apparatus through the bus; S32: The firmware in the data acceleration processing apparatus obtains the public key for signature verification from the flash memory, and performs signature verification on signature information in the model information; S33: After the signature verification succeeds, the firmware in the data acceleration processing apparatus obtains the decryption key from the flash memory to decrypt the model weights in a ciphertext form that are stored in the unprotected storage area, and stores, in the protected storage area, the model weights in a plaintext form that are obtained through decryption; and S34: The firmware in the data acceleration processing apparatus loads the model weights in the plaintext form and executes the computing task.

In the foregoing example, the firmware in the data acceleration processing apparatus provides the following functions to protect the model information in a running period by configuring the inference framework: a. Signature verification on the model information: protect integrity of the model information, and prevent the model information from being tampered with and implanted with a malicious operator and the like; b. Model weight decryption: protect confidentiality of the model weights; c. Protected storage area: A storage area is isolated in the second memory in the data acceleration processing apparatus, and is accessible only by the acceleration processor in the data acceleration processing apparatus and inaccessible to the general-purpose processing apparatus through the bus; and in addition, the decrypted model weights in the plaintext form are stored in the protected storage area in the memory, so that read efficiency of the acceleration processor can be improved; and d. Key management: ensure confidentiality of the keys by performing encryption management on the public key for signature verification and the decryption key.

In this embodiment of this application, the general-purpose processing apparatus may transmit the model information to the data acceleration processing apparatus through the bus, and the model weights in the model information are in the ciphertext form, thereby ensuring security of the model weights in the general-purpose processing apparatus and security in a transmission process. In addition, after decrypting the model weights in the ciphertext form, the data acceleration processing apparatus stores, in the protected storage area inaccessible to the general-purpose processing apparatus, the model weights in the plaintext form that are obtained through decryption. That is, the model weights in the plaintext form are inaccessible to the general-purpose processing apparatus. In this way, when the data acceleration processing apparatus executes the computing task based on the model weights in the plaintext form, security of the model weights can be ensured during execution. Therefore, in comparison with a related technology, this embodiment of this application can be used for still protecting security of the model information in a running process without using a hardware isolation technology, for example, a TEE, so as to prevent the model information from being theft.

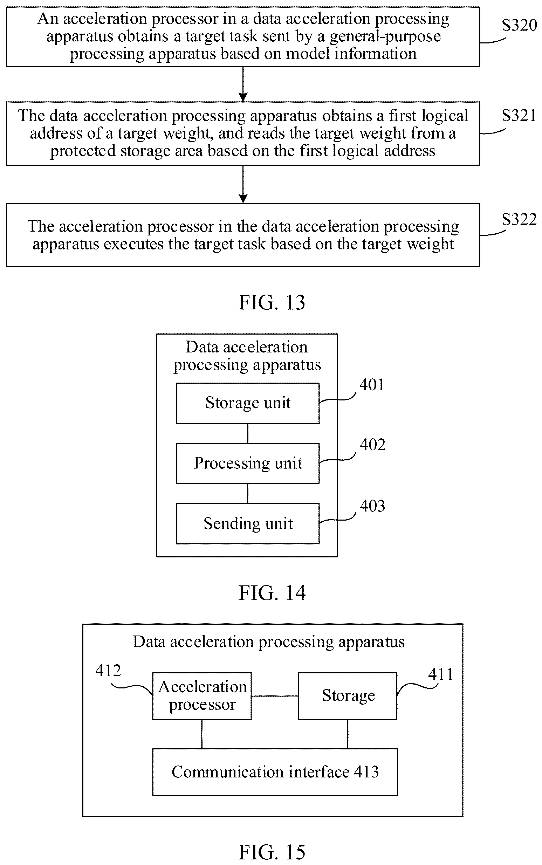

Based on this, an embodiment of this application further provides another data processing method. The data processing method may be applied to the data acceleration processing apparatus described above. As shown in FIG. 13, the data processing method includes the following steps.

S320: An acceleration processor in a data acceleration processing apparatus obtains a target task sent by a general-purpose processing apparatus based on model information.

The target task may be any one of a plurality of computing tasks corresponding to the model information. Optionally, the target task may include a calculation type and operand information. For example, the calculation type may be one of an addition operation, a subtraction operation, an exclusive OR operation, an OR operation, an AND operation, and the like. The operand information may indicate storage information of input data corresponding to the target task, and the storage information may be used for obtaining the input data.

S321: The data acceleration processing apparatus obtains a first logical address of a target weight, and reads the target weight from a protected storage area based on the first logical address, where the protected storage area is inaccessible to the general-purpose processing apparatus.

In a possible embodiment, that the acceleration processor obtains the first logical address of the target weight may include: The acceleration processor determines base addresses of model weights in a plaintext form in the protected storage area; the acceleration processor sends the base addresses to the general-purpose processing apparatus, where the base addresses are used for determining the first logical address of the target weight; and the acceleration processor receives the first logical address that is of the target weight and that is sent by the general-purpose processing apparatus.

The target weight is a weight in the model weights that needs to be used when the target task is executed. That is, the model weights include the target weight. The first logical address of the target weight is specifically a logical address of the target weight in the protected storage area.

S322: The acceleration processor in the data acceleration processing apparatus executes the target task based on the target weight.

In a possible embodiment, the acceleration processor in the data acceleration processing apparatus may further obtain a corresponding operand based on the operand information included in the target task. The acceleration processor may execute the target task based on the obtained target weight and operand, and the calculation type included in the target task. Then, the acceleration processor may further send an execution result corresponding to the target task to the general-purpose processing apparatus.

It may be understood that all related content of the steps in the foregoing method embodiments corresponding to FIG. 5 to FIG. 12 may be referenced to the descriptions of the method embodiment corresponding to FIG. 13. Details are not described herein again in this embodiment of this application.

In this embodiment of this application, the data acceleration processing apparatus may store, in the protected storage area inaccessible to the general-purpose processing apparatus, the model weights that are in the plaintext form and that are obtained by decrypting the model weights in the ciphertext form. That is, the model weights in the plaintext form are inaccessible to the general-purpose processing apparatus. In this way, when the data acceleration processing apparatus executes the corresponding target task based on the model weights in the plaintext form, security of the model weights can be ensured during execution.

The foregoing mainly describes the solutions provided in embodiments of this application from a perspective of interaction between the general-purpose processing apparatus and the data acceleration processing apparatus. It may be understood that, to implement the foregoing functions, the general-purpose processing apparatus and the data acceleration processing apparatus include corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the general-purpose processing apparatus and the data accelerated processing apparatus may be divided into functional modules based on the foregoing method examples. For example, each functional module may be obtained through division based on each function, or two or more functions may be integrated into one processing module. The functional module may be implemented in a form of hardware, or may be implemented in a form of a software functional module. It should be noted that, in embodiments of this application, module division is an example, and is merely a logical function division. In actual implementation, another division manner may be used. The following uses division of each functional module based on a corresponding function as an example for description.

When an integrated unit is used, FIG. 14 is a diagram of a possible structure of a data acceleration processing apparatus in the foregoing embodiments. The data acceleration processing apparatus may include a storage unit 401 and a processing unit 402. In a possible embodiment, the storage unit 401 may be configured to support the data acceleration processing apparatus in performing S303 in the foregoing method embodiment. The processing unit 402 may be configured to support the apparatus in performing S304, S305, S309, and the like in the foregoing method embodiment. Further, the data acceleration processing apparatus further includes a sending unit 403. The sending unit 403 may be configured to support the data acceleration processing apparatus in performing S306 in the foregoing method embodiment. In a possible embodiment, the processing unit 402 may be configured to support the data acceleration processing apparatus in performing S320 to S322 in the foregoing method embodiment.

All related content of each step involved in the foregoing method embodiment may be referenced to a function description of a corresponding functional module, and details are not described herein again.

On a basis of hardware implementation, the processing unit 402 may be an acceleration processor, the sending unit 403 may be a transmitter, the transmitter and a receiver may be integrated into a transceiver, and the transceiver may also be referred to as a communication interface.

FIG. 15 is a diagram of a possible structure of a data acceleration processing apparatus according to an embodiment of this application. The data acceleration processing apparatus may include a storage 411 and an acceleration processor 412. The storage 411 is configured to store program code and data of the apparatus, and the acceleration processor 412 is configured to control an action of the data acceleration processing apparatus in the foregoing method embodiment. For example, the acceleration processor 412 is configured to support the apparatus in performing S304, S305, and/or S309 in the foregoing method embodiment, or performing S320 to S322 in the foregoing method embodiment, and/or is configured to perform another process of the technology described in this specification. Optionally, the data acceleration processing apparatus may further include a communication interface 413. The communication interface 413 is configured to support the apparatus in performing the step of communicating with the general-purpose processing apparatus in the foregoing method embodiment.

The acceleration processor 412 may be a GPU, an NPU, a DSP, a CPU, an application-specific integrated circuit, a processing chip, a field programmable gate array or another programmable logic device, a transistor logic device, a hardware component, or any combination thereof. The acceleration processor may implement or execute various logical blocks, modules, and circuits described with reference to content disclosed in embodiments of this application. Alternatively, the acceleration processor 412 may be a combination that implements a computing function, for example, a combination that includes one or more microprocessors or a combination of a digital signal processor and a microprocessor.

The storage 411 may be a volatile memory, a non-volatile memory, or the like. Optionally, the storage 411 may be integrated into the acceleration processor 412. In an example, the storage 411 may include a memory, a persistent storage, a one-time programmable storage, and the like. For example, the persistent storage may include a flash memory. The flash memory may be configured to store a decryption key, a public key for signature verification, and/or the like in the following, and the one-time programmable storage may be configured to store a hardware unique key HUK in the following.

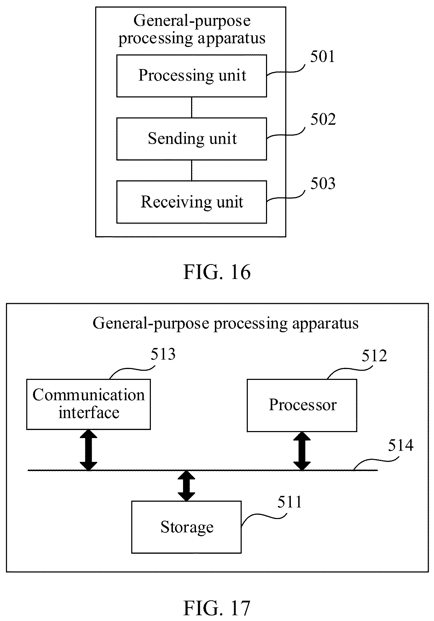

When an integrated unit is used, FIG. 16 is a diagram of a possible structure of a general-purpose processing apparatus in the foregoing embodiments. The apparatus may include a processing unit 501 and a sending unit 502. In a possible embodiment, the processing unit 501 is configured to support the apparatus in performing S301 and the steps of determining the logical addresses in S307 in the foregoing method embodiment. The sending unit 502 may be configured to support the apparatus in performing S302 and S308 in the foregoing method embodiment. Further, the general-purpose processing apparatus further includes a receiving unit 503. The receiving unit 503 is configured to support the general-purpose processing apparatus in performing the step of receiving the base addresses in S307 in the foregoing method embodiment.

All related content of each step involved in the foregoing method embodiment may be referenced to a function description of a corresponding functional module, and details are not described herein again.

On a basis of hardware implementation, the processing unit 501 may be a processor, the sending unit 502 may be a transmitter, the receiving unit 503 may be a receiver, the receiver and the transmitter may be integrated into a transceiver, and the transceiver may also be referred to as a communication interface.

FIG. 17 is a diagram of a possible structure of a general-purpose processing apparatus according to an embodiment of this application. The apparatus includes a storage 511 and a processor 512. The storage 511 is configured to store program code and data of the apparatus, and the processor 512 is configured to control an action of the general-purpose processing apparatus in the foregoing method embodiment. For example, the processor 512 is configured to perform S301 and the steps of determining the logical addresses in S307 in the foregoing method embodiment, and/or another process of the technology described in this specification. Optionally, the apparatus may further include a communication interface 513. The communication interface 513 is configured to support the apparatus in performing the step of communicating with the data acceleration processing apparatus in the foregoing method embodiment.

The processor 512 may be a central processing unit, a general-purpose processor, a digital signal processor, an application-specific integrated circuit, a processing chip, a field programmable gate array or another programmable logic device, a transistor logic device, a hardware component, or any combination thereof. The processor may implement or execute various logical blocks, modules, and circuits described with reference to content disclosed in embodiments of this application. Alternatively, the processor 512 may be a combination that implements a computing function, for example, a combination that includes one or more microprocessors or a combination of a digital signal processor and a microprocessor. The communication interface 513 may be a transceiver, a transceiver circuit, a transceiver interface, or the like. The storage 511 may be a volatile memory, a non-volatile memory, or the like.

For example, the communication interface 513, the processor 512, and the storage 511 are connected to each other through a bus 514. The bus 514 may be a PCI bus, an EISA bus, or the like. The bus 514 may be classified into an address bus, a data bus, a control bus, and the like. For ease of representation, only one thick line is used to represent the bus in the figure, but this does not mean that there is only one bus or only one type of bus.

Optionally, the storage 511 may be included in the processor 512.

According to another aspect of this application, an electronic device is further provided, where the electronic device includes any data acceleration processing apparatus provided above and any general-purpose processing apparatus provided above. The data acceleration processing apparatus is configured to perform the steps of the data acceleration processing apparatus in the foregoing method embodiment. The general-purpose processing apparatus is configured to perform the steps of the general-purpose processing apparatus in the foregoing method embodiment.

According to another aspect of this application, a terminal device is further provided, where the terminal device includes any data acceleration processing apparatus provided above and any general-purpose processing apparatus provided above. The data acceleration processing apparatus is configured to perform the steps of the data acceleration processing apparatus in the foregoing method embodiment. The general-purpose processing apparatus is configured to perform the steps of the general-purpose processing apparatus in the foregoing method embodiment.

For example, the terminal device may be a mobile phone, a tablet, a computer, a camera, a wearable device, a vehicle-mounted device, or the like.

All or some of the methods provided in embodiments of this application may be implemented by using software, hardware, or a combination thereof. When software is used to implement embodiments, all or a part of embodiments may be implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, a network device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, radio, or microwave) manner. The computer-readable storage medium may be any medium accessible to the computer, or a data storage device, such as a server or a data center, integrating one or more media. The medium may be a magnetic medium (for example, a floppy disk, a hard disk, or a magnetic tape), an optical medium (for example, an optical disc), a semiconductor medium (for example, a solid-state drive), or the like.

According to still another aspect of this application, a computer-readable storage medium is provided, where the computer-readable storage medium includes computer instructions, and when the computer instructions are run by a device, the device is caused to perform one or more steps of the data acceleration processing apparatus in the foregoing method embodiment.

According to still another aspect of this application, a computer-readable storage medium is provided, where the computer-readable storage medium includes computer instructions, and when the computer instructions are run by a device, the device is caused to perform one or more steps of the general-purpose processing apparatus in the data processing method provided in the foregoing method embodiment.

According to still another aspect of this application, a computer program product including instructions is provided, where when the computer program product runs on a computer, the computer is caused to perform one or more steps of the data acceleration processing apparatus in the foregoing method embodiment.

According to still another aspect of this application, a computer program product including instructions is provided, where when the computer program product runs on a computer, the computer is caused to perform one or more steps of the general-purpose processing apparatus in the foregoing method embodiment.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data processing method, applied to a data acceleration processing apparatus, wherein the data acceleration processing apparatus comprises an acceleration processor and a memory, the memory comprises an unprotected storage area and a protected storage area, and the method comprises:
receiving, by the memory, model information sent by a general-purpose processing apparatus, and storing the model information in the unprotected storage area, wherein the unprotected storage area is accessible to the general-purpose processing apparatus, and the model information comprises model weights in a ciphertext form; and
decrypting, by the acceleration processor, the model weights in the ciphertext form, and storing, in the protected storage area, model weights in a plaintext form that are obtained through decryption, wherein the protected storage area is inaccessible to the general-purpose processing apparatus.

2. The method according to claim 1, wherein the data acceleration processing apparatus further comprises a persistent storage, and the persistent storage stores a decryption key; and decrypting, by the acceleration processor, the model weights in the ciphertext form comprises:
obtaining, by the acceleration processor, the decryption key from the persistent storage, and decrypting the model weights in the ciphertext form according to the decryption key.

3. The method according to claim 1 or 2, wherein the data acceleration processing apparatus further comprises a persistent storage, the persistent storage stores a public key for signature verification, and the model information further comprises signature information; and the method further comprises:
obtaining, by the acceleration processor, the public key for signature verification from the persistent storage, and determining, according to the public key for signature verification, that the signature information in the model information is successfully verified.

4. The method according to claim 2 or 3, wherein the decryption key and/or the public key for signature verification are/is stored in an encrypted manner, the data acceleration processing apparatus further comprises a one-time programmable storage, and the one-time programmable storage stores a hardware unique key HUK; and the method further comprises:
obtaining, by the acceleration processor, the HUK from the one-time programmable storage, and performing encryption and decryption on the decryption key and/or the public key for signature verification according to a derivation key of the HUK.

5. The method according to any one of claims 1 to 4, wherein the model weights are stored continuously in the protected storage area, and the method further comprises:
sending, by the acceleration processor to the general-purpose processing apparatus, base addresses of the model weights in the plaintext form in the protected storage area, wherein the base addresses are used for determining logical addresses of the model weights; and
receiving, by the acceleration processor, the logical addresses that are of the model weights and that are sent by the general-purpose processing apparatus, and obtaining the model weights in the plaintext form from the protected storage area based on the logical addresses.

6. The method according to any one of claims 1 to 5, wherein the method further comprises:
receiving, by the acceleration processor, memory configuration information, and configuring the unprotected storage area and/or the protected storage area based on the memory configuration information.

7. A data processing method, applied to a general-purpose processing apparatus, wherein the general-purpose processing apparatus is configured to communicate with a data acceleration processing apparatus, the data acceleration processing apparatus comprises an acceleration processor and a memory, the memory comprises an unprotected storage area accessible to the general-purpose processing apparatus and a protected storage area inaccessible to the general-purpose processing apparatus, and the method comprises:
obtaining model information, wherein the model information comprises model weights in a ciphertext form; and
sending the model information to the data acceleration processing apparatus, to cause the memory in the data acceleration processing apparatus to store the model information in the unprotected storage area, and cause the acceleration processor to store, in the protected storage area, model weights that are in a plaintext form and that are obtained by decrypting the model weights in the ciphertext form.

8. The method according to claim 7, wherein the model information further comprises signature information, and the signature information is used for verifying the model information.

9. The method according to claim 7 or 8, wherein the model weights are stored continuously in the protected storage area, and the method further comprises:
receiving base addresses that are sent by the data acceleration processing apparatus and that are of the model weights in the plaintext form in the protected storage area;
determining logical addresses of the model weights based on the base addresses and address offset values of the model weights; and
sending the logical addresses of the model weights to the data acceleration processing apparatus.

10. The method according to any one of claims 7 to 9, wherein the method further comprises:
sending memory configuration information to the data acceleration processing apparatus, wherein the memory configuration information is used for configuring the unprotected storage area and/or the protected storage area.

11. A data processing method, applied to a data acceleration processing apparatus, wherein the data acceleration processing apparatus comprises an acceleration processor and a memory, the memory comprises an unprotected storage area and a protected storage area, the unprotected storage area comprises model information, the model information comprises model weights in a ciphertext form, the protected storage area comprises model weights that are in a plaintext form and that are obtained by decrypting the model weights in the ciphertext form, and the method comprises:
obtaining, by the acceleration processor, a target task sent by a general-purpose processing apparatus based on the model information;
obtaining, by the acceleration processor, a first logical address of a target weight, and reading the target weight from the protected storage area based on the first logical address, wherein the target weight is a weight in the model weights that needs to be used when the target task is executed, and the protected storage area is inaccessible to the general-purpose processing apparatus; and
executing, by the acceleration processor, the target task based on the target weight.

12. The method according to claim 11, wherein obtaining, by the acceleration processor, the logical address of the target weight comprises:
determining, by the acceleration processor, base addresses of the model weights in the plaintext form in the protected storage area;
sending, by the acceleration processor, the base addresses to the general-purpose processing apparatus, wherein the base addresses are used for determining the first logical address of the target weight; and
receiving, by the acceleration processor, the first logical address that is of the target weight and that is sent by the general-purpose processing apparatus.

13. A data acceleration processing apparatus, wherein the data acceleration processing apparatus comprises a processing unit and a storage unit, and the storage unit comprises an unprotected storage area and a protected storage area, wherein
the storage unit is configured to: receive model information sent by a general-purpose processing apparatus, and store the model information in the unprotected storage area, wherein the unprotected storage area is accessible to the general-purpose processing apparatus, and the model information comprises model weights in a ciphertext form; and
the processing unit is configured to: decrypt the model weights in the ciphertext form, and store, in the protected storage area, model weights in a plaintext form that are obtained through decryption, wherein the protected storage area is inaccessible to the general-purpose processing apparatus.

14. The data acceleration processing apparatus according to claim 13, wherein the data acceleration processing apparatus further comprises a persistent storage, and the persistent storage stores a decryption key; and
the processing unit is further configured to: obtain the decryption key from the persistent storage, and decrypt the model weights in the ciphertext form according to the decryption key.

15. The data acceleration processing apparatus according to claim 13 or 14, wherein the data acceleration processing apparatus further comprises a persistent storage, the persistent storage stores a public key for signature verification, and the model information further comprises signature information; and
the processing unit is further configured to: obtain the public key for signature verification from the persistent storage, and determine, according to the public key for signature verification, that the signature information in the model information is successfully verified.

16. The data acceleration processing apparatus according to claim 14 or 15, wherein the decryption key and/or the public key for signature verification are/is stored in an encrypted manner, the data acceleration processing apparatus further comprises a one-time programmable storage, and the one-time programmable storage stores a hardware unique key HUK; and
the processing unit is further configured to: obtain the HUK from the one-time programmable storage, and perform encryption and decryption on the decryption key and/or the public key for signature verification according to a derivation key of the HUK.

17. The data acceleration processing apparatus according to any one of claims 13 to 16, wherein the model weights are stored continuously in the protected storage area;
the processing unit is further configured to send, to the general-purpose processing apparatus, base addresses of the model weights in the plaintext form in the protected storage area, wherein the base addresses are used for determining logical addresses of the model weights; and
the processing unit is further configured to: receive the logical addresses that are of the model weights and that are sent by the general-purpose processing apparatus, and obtain the model weights in the plaintext form from the protected storage area based on the logical addresses.

18. The data acceleration processing apparatus according to any one of claims 13 to 17, wherein
the processing unit is further configured to: receive memory configuration information, and configure the unprotected storage area and/or the protected storage area based on the memory configuration information.

19. A general-purpose processing apparatus, wherein the general-purpose processing apparatus is configured to communicate with a data acceleration processing apparatus, the data acceleration processing apparatus comprises an acceleration processor and a memory, the memory comprises an unprotected storage area accessible to the general-purpose processing apparatus and a protected storage area inaccessible to the general-purpose processing apparatus, and the general-purpose processing apparatus comprises:
a processing unit, configured to obtain model information, wherein the model information comprises model weights in a ciphertext form; and
a sending unit, configured to send the model information to the data acceleration processing apparatus, to cause the memory in the data acceleration processing apparatus to store the model information in the unprotected storage area, and cause the acceleration processor to store, in the protected storage area, model weights that are in a plaintext form and that are obtained by decrypting the model weights in the ciphertext form.

20. The general-purpose processing apparatus according to claim 19, wherein the model information further comprises signature information, and the signature information is used for verifying the model information.

21. The general-purpose processing apparatus according to claim 19 or 20, wherein the model weights are stored continuously in the protected storage area, and the general-purpose processing apparatus further comprises a receiving unit, wherein
the receiving unit is configured to receive base addresses that are sent by the data acceleration processing apparatus and that are of the model weights in the plaintext form in the protected storage area;
the processing unit is further configured to determine logical addresses of the model weights based on the base addresses and address offset values of the model weights; and
the sending unit is further configured to send the logical addresses of the model weights to the data acceleration processing apparatus.

22. The general-purpose processing apparatus according to any one of claims 19 to 21, wherein
the sending unit is further configured to send memory configuration information to the data acceleration processing apparatus, wherein the memory configuration information is used for configuring the unprotected storage area and/or the protected storage area.

23. A data acceleration processing apparatus, wherein the data acceleration processing apparatus comprises a processing unit and a storage unit, and the storage unit comprises an unprotected storage area and a protected storage area, wherein
the storage unit is configured to store model information in the unprotected storage area, wherein the model information comprises model weights in a ciphertext form, and the unprotected storage area is accessible by a general-purpose processing apparatus;
the storage unit is further configured to store, in the protected storage area, model weights that are in a plaintext form and that correspond to the model weights in the ciphertext form, wherein the protected storage area is inaccessible to the general-purpose processing apparatus;
the processing unit is configured to obtain a target task sent by the general-purpose processing apparatus based on the model information;
the processing unit is further configured to: obtain a first logical address of a target weight, and read the target weight from the protected storage area based on the first logical address, wherein the target weight is a weight in the model weights that needs to be used when the target task is executed, and the protected storage area is inaccessible to the general-purpose processing apparatus; and
the processing unit is further configured to execute the target task based on the target weight.

24. The data acceleration processing apparatus according to claim 23, wherein the data acceleration processing apparatus further comprises a sending unit and a receiving unit, wherein
the processing unit is further configured to determine base addresses of the model weights in the plaintext form in the protected storage area;
the sending unit is further configured to send the base addresses to the general-purpose processing apparatus, wherein the base addresses are used for determining the first logical address of the target weight; and
the receiving unit is configured to receive the first logical address that is of the target weight and that is sent by the general-purpose processing apparatus.

25. A data acceleration processing apparatus, wherein the data acceleration processing apparatus comprises an acceleration processor and a storage, the storage stores instructions, and when the acceleration processor runs the instructions, the apparatus is caused to perform the data processing method according to any one of claims 1 to 6, or perform the data processing method according to either of claims 11 and 12.

26. A general-purpose processing apparatus, wherein the general-purpose processing apparatus comprises a processor and a storage, the storage stores instructions, and when the processor runs the instructions, the apparatus is caused to perform the data processing method according to any one of claims 7 to 10.

27. An electronic device, wherein the electronic device comprises the data acceleration processing apparatus according to any one of claims 13 to 18, either of claims 23 and 24, or claim 25, and the general-purpose processing apparatus according to any one of claims 19 to 22, or claim 26.

28. A computer-readable storage medium, wherein the computer-readable storage medium stores instructions, and when the instructions are executed by a device, the device is caused to perform the data processing method according to any one of claims 1 to 12.
